(19) Europäisches Patentamt
European Patent Office
Office européen des brevets

(11) **EP 3 816 576 B1**

(12) **EUROPEAN PATENT SPECIFICATION**

(45) Date of publication and mention
of the grant of the patent:
**16.08.2023 Bulletin 2023/33**

(51) International Patent Classification (IPC):
***G01C 3/06*** (2006.01)    ***B60R 11/02*** (2006.01)
***B60R 11/04*** (2006.01)

(21) Application number: **19825664.6**

(22) Date of filing: **03.06.2019**

(52) Cooperative Patent Classification (CPC):
**B60R 11/04;** B60R 2011/0026

(86) International application number:
**PCT/JP2019/021908**

(87) International publication number:
**WO 2020/003904 (02.01.2020 Gazette 2020/01)**

(54) **STEREO CAMERA DEVICE**

STEREOKAMERAVORRICHTUNG

DISPOSITIF DE CAMÉRA STÉRÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2018 JP 2018122778**

(43) Date of publication of application:
**05.05.2021 Bulletin 2021/18**

(73) Proprietor: **Hitachi Astemo, Ltd.
Hitachinaka-shi, Ibaraki 312-8503 (JP)**

(72) Inventors:
• **YAMAMOTO Kenji
Hitachinaka-shi, Ibaraki 312-8503 (JP)**
• **SASADA, Yoshiyuki
Hitachinaka-shi, Ibaraki 312-8503 (JP)**
• **OOTAKE, Masaaki
Hitachinaka-shi, Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A1- 3 288 250          WO-A1-2017/132088
WO-A1-2018/055906     JP-A- 2015 198 224
JP-A- 2015 198 224       US-A1- 2015 158 435

• **RONCZKA J: "Safe and Dynamic Driving towards Vision Zero", INTERNET CITATION, 15 July 2015 (2015-07-15), pages 1-18, XP009524325, Retrieved from the Internet: URL:https://www.tec.wzw.tum.de/fileadmin/V DI_Seminar/Ronczka_Continental.pdf [retrieved on 2019-08-20]**
• **WATANABE HIROSHI: "Two reasons DENSO adopted RTOS of eSOL for in-vehicle stereo cameras", eT-Kernel MCE, 18 April 2018 (2018-04-18), pages 1-2, XP009524329,**
• **J. Ronczka: "Safe and Dynamic Driving towards Vision Zero", VDI-SEMINAR: MODERNE SENSORIK - DER SCHLÜSSEL FÜR PRODUKTIVITÄT & SICHERHEIT - Umfeldsensorik im Automobil, 15 July 2015 (2015-07-15), pages 1-18, XP009524325, Retrieved from the Internet: URL:https://www.tec.wzw.tum.de/fileadmin/V DI_Seminar/Ronczka_Continental.pdf [retrieved on 2019-08-20]**

**Description**

Technical Field

The present invention relates to a stereo camera device.

Background Art

In recent years, advanced driver assistance systems using external recognition sensors such as in-vehicle cameras have rapidly become widespread. In the in-vehicle camera, a stereo camera device can recognize various objects around an automobile in detail, and thus is attracting particular attention as a front sensing camera for an automatic driving system. Thus, regarding a method of attaching the stereo camera device to a vehicle, for example, as disclosed in PTL 1, a method of fixing a camera stay to the housing of the vehicle with a screw or the like is known. However, at present, a method of attaching the stereo camera device to the windshield with a member such as a bracket is the mainstream from a viewpoint of design and comfort.

PTL 2 shows a stereo camera device according to the preamble of claim 1 comprising a holding structure of a substrate which positions the substrate relative to a housing. Further, the holding structure of PTL 2 holds a substrate on a housing and includes at least one fixing means which fixes the substrate to the housing, and at least one floating support means which supports the substrate on the housing so that the substrate may move in a direction that the substrate moves close to or separates from a fixing point fixed by the fixing means.

Citation List

Patent Literature

PTL 1: JP 2009-68906 A

PTL 2: JP 2015 198224 A

Summary of Invention

Technical Problem

However, there are two restrictions when the stereo camera device is attached to the windshield.

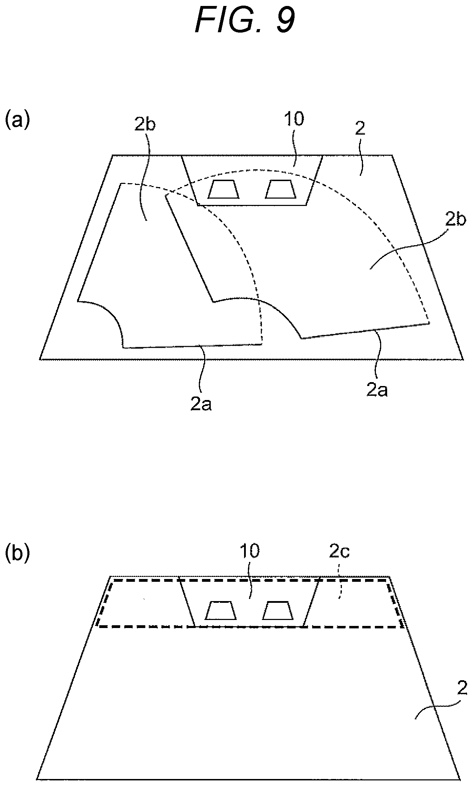

First, as illustrated in FIG. 9(a), an imaging area of a stereo camera device 10 on a windshield 2 must fit within the wiping area 2b of a wiper 2a. This is to wipe off dirt and raindrops adhered to the windshield 2 to normally operate the stereo camera device 10 or to secure the accuracy of imaging. Next, in order to secure the visibility of a driver, according to the regulations regarding pasted objects and attachments of the windshield 2, the stereo camera device 10 can be attached only in an area 2c surrounded by the broken line in FIG. 9(b) (that is, area in which the visibility of the driver is not impaired). With the above two restrictions, the degree of freedom of layout when the stereo camera device is attached to the windshield is greatly limited.

The present invention has been made to solve such a technical problem, and an object of the present invention is to provide a stereo camera device capable of improving the degree of freedom of layout when attached to a windshield.

Solution to Problem

According to the present invention, as defined in claim 1, a stereo camera device includes a pair of imaging units that image a front of a windshield through the windshield, a control circuit board that is electrically connected to each of the pair of imaging units, and a housing that accommodates the pair of imaging units and the control circuit board and is allowed to be attached to the windshield through an attachment protrusion provided at the center of a front end of the housing. A recess portion for accommodating at least a portion of the attachment protrusion is provided at the center of the front end of the housing. The control circuit board has a board recess portion provided at a position corresponding to the recess portion.

Advantageous Effects of Invention

According to the present invention, since the recess portion for accommodating at least the portion of the attachment protrusion is provided at the center of the front end of the housing, it is possible to attach the pair of imaging units close to the windshield. Thus, since the imaging area of the imaging unit on the windshield is reduced, it is possible to improve the degree of freedom of layout when the stereo camera device is attached to the windshield.

Brief Description of Drawings

[FIG. 1] FIG. 1(a) is a schematic top view illustrating a vehicle equipped with a stereo camera device according to an embodiment, and FIG. 1(b) is a schematic side view illustrating the vehicle equipped with the stereo camera device according to the embodiment.
[FIG. 2] FIG. 2 is an exploded perspective view illustrating a structure of the stereo camera device.
[FIG. 3] FIG. 3 is a plan view illustrating the stereo camera device.
[FIG. 4] FIG. 4 is a schematic side view illustrating a form in which the stereo camera device is attached to a windshield.
[FIG. 5] FIG. 5(a) is a plan view for explaining a recess portion of the stereo camera device, and FIG. 5(b) is a front view for explaining the recess portion of the stereo camera device.
[FIG. 6] FIG. 6 is a plan view for explaining three-point support of the stereo camera device.
[FIG. 7] FIG. 7 is a schematic view for explaining an imaging area of an imaging unit on the windshield.
[FIG. 8] FIG. 8 is a schematic diagram for explaining a range of a control circuit board in which a board recess portion is provided.
[FIG. 9] FIG. 9(a) is a schematic diagram for explaining a restriction (relation with a wiper) when the stereo camera device is attached to the windshield, and FIG. 9(b) is a schematic diagram for explaining restrictions (pasting position and attaching position) when the stereo camera device is attached to the windshield.

Description of Embodiments

Hereinafter, a stereo camera device according to an embodiment of the present invention will be described with reference to the drawings.
In the description of the drawings, the same elements are denoted by the same reference signs, and repetitive description thereof will be omitted. In addition, in the following description, the positions or directions of up and down, left and right, front and back are based on the state in which the stereo camera device is mounted in a vehicle as an in-vehicle camera.

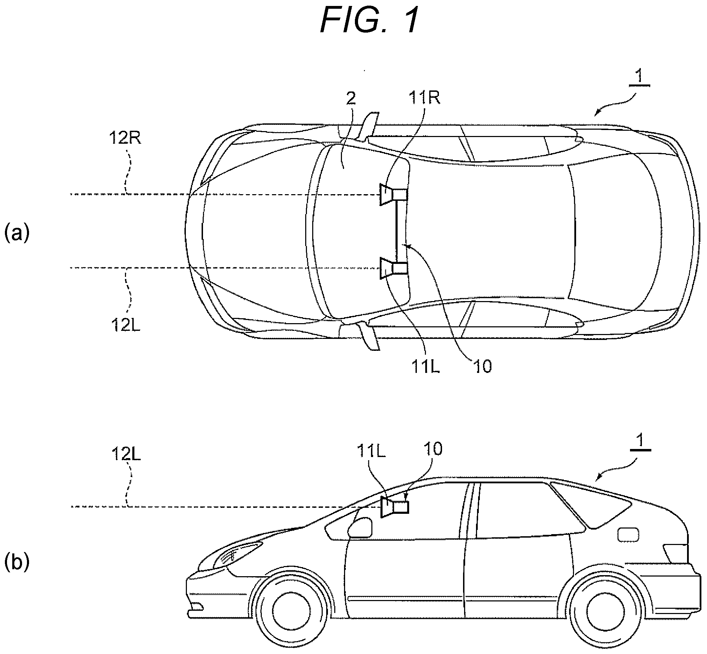

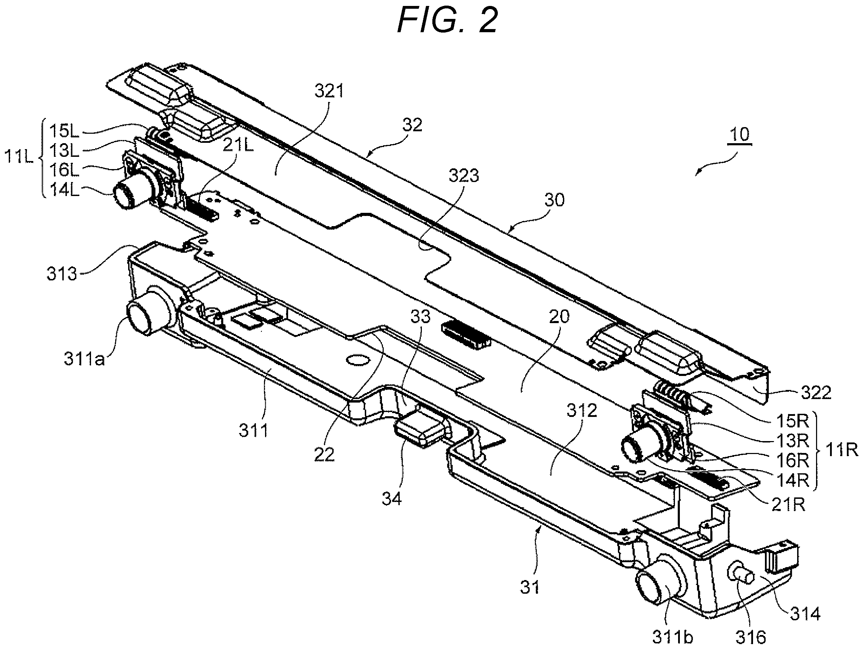

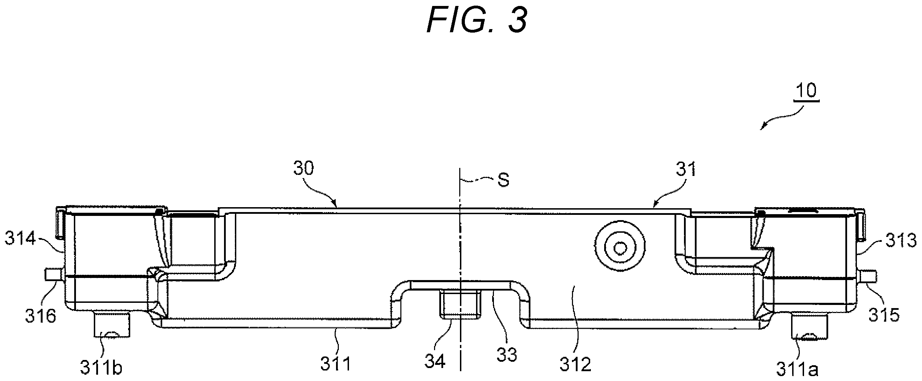

FIG. 1(a) is a schematic top view illustrating a vehicle equipped with a stereo camera device according to an embodiment, and FIG. 1(b) is a schematic side view illustrating the vehicle equipped with the stereo camera device according to the embodiment. FIG. 2 is an exploded perspective view illustrating a structure of the stereo camera device. FIG. 3 is a plan view illustrating the stereo camera device. Note that, in the embodiment, the stereo camera device is attached to a vehicle, in a state where an upper housing is disposed above, and a lower housing is disposed below. However, in order to make it easy to understand an internal structure and the like of the upper housing, FIG. 2 illustrates a state where the upper housing is disposed on a lower side of the surface of paper, and the lower housing is disposed on an upper side of the surface of paper.
As illustrated in FIG. 1, in the embodiment, the stereo camera device 10 is attached to the inside of a windshield 2 of a vehicle 1, for example. The stereo camera device images the front of the windshield 2 (that is, the front of the vehicle) through the windshield 2, calculates the parallax from the obtained image to generate a distance image, and recognizes a target object in front of the vehicle based on the generated distance image.
The stereo camera device 10 mainly includes a pair of imaging units (left imaging unit 11L and right imaging unit 11R), a control circuit board 20, and a housing 30. The pair of imaging units are disposed to be spaced at a predetermined distance. The control circuit board 20 is electrically connected to each of the left imaging unit 11L and the right imaging unit 11R. The housing 30 accommodates the left imaging unit 11L, the right imaging unit 11R, and the control circuit board 20.
The left imaging unit 11L and the right imaging unit 11R are spaced from each other, for example, at a distance of 100 mm to 400 mm, so that an optical axis 12L of the left imaging unit 11L and an optical axis 12R of the right imaging unit 11R are disposed to be parallel to a vehicle front-rear direction. Since the structures of the left imaging unit 11L and the right imaging unit 11R are the same as each other, only the left imaging unit 11L will be described below. The names and reference signs relating to the right imaging unit 11R will be indicated in parentheses, and detailed description thereof will be omitted.

The left imaging unit 11L (right imaging unit 11R) includes an imaging element (not illustrated) configured by a CCD, a CMOS, and the like, a left imaging board 13L (right image board 13R) on which the imaging element is mounted, a left lens unit 14L (right lens unit 14R) disposed in front of the left imaging board 13L (right imaging board 13R), and a left cable unit 15L (right cable unit 15R) that electrically connects the left imaging board 13L (right imaging board 13R) and the control circuit board 20 to each other. The position of the left imaging unit 11L (right imaging unit 11R) is adjusted so that the optical axis 12L (optical axis 12R) thereof is parallel to the vehicle front-rear direction. The left imaging unit 11L (right imaging unit 11R) is fixed to an upper housing 31 of the housing 30 through a flange portion 16L (flange portion 16R) of the left lens unit 14L (right lens unit 14R) .

The left cable unit 15L (right cable unit 15R) has, for example, a configuration in which a plurality of FFC (Flexible Flat Cable) cables are arranged in parallel to form a tape. The lengths of the cables are equal to each other. One end portion of the left cable portion 15L (right cable portion 15R) is connected to, for example, a connector (not illustrated) mounted on the left imaging board 13L (right imaging board 13R). The other end portion is connected to a left connector 21L (right connector 21R) mounted on the control circuit board 20.

The control circuit board 20 receives an image signal obtained by imaging of the left imaging unit 11L and the right imaging unit 11R, performs image processing based on the received image signal, and outputs a vehicle control signal. In addition to the left connector 21L and the right connector 21R described above, various electronic components for forming an electronic circuit are mounted on the control circuit board 20. A substantially rectangular board recess portion 22 is provided at the center of the front end of the control circuit board 20.

The board recess portion 22 has a structure formed corresponding to a recess portion 33 of the housing 30 described later. The board recess portion 22 is disposed between the left imaging unit 11L and the right imaging unit 11R. In other words, the left imaging unit 11L and the right imaging unit 11R are disposed on the left and right sides of the control circuit board 20 with the board recess portion 22 interposed between the left imaging unit and the right imaging unit, respectively. The control circuit board 20 is made of a material containing synthetic resin such as glass epoxy, and is fixed to the upper housing 31 of the housing 30 by screwing or the like.

As illustrated in FIG. 2, the housing 30 has a flat box shape having a longitudinal direction which is along a vehicle left-right direction. The housing is configured by the upper housing 31 having an L-shaped cross section and a lower housing 32 having an inverted L-shaped cross section. The upper housing 31 and the lower housing 32 are formed by, for example, punching and bending a metal plate, and are fixed to each other by screwing or the like.

The upper housing 31 includes a front side wall 311 constituting the front side wall of the housing 30, a top plate 312 constituting the top plate of the housing 30, a left side wall 313 constituting the left side wall of the housing 30, and a right side wall 314 constituting the right side wall of the housing 30. A left column 311a into which the left lens unit 14L of the left imaging unit 11L can be inserted is provided at a left end portion of the front side wall 311. A right column 311b into which the right lens unit 14R of the right imaging unit 11R can be inserted into a right end portion of the front side wall. In addition, a columnar left attachment pin 315 that protrudes outward (here, to the left of the vehicle) from the left side wall 313 is provided in the left side wall 313. Correspondingly, a columnar right attachment pin 316 that protrudes outward (here, to the right of the vehicle) from the right side wall 314 is provided in the right side wall 314.

Further, an attachment protrusion 34 and a recess portion 33 for accommodating the attachment protrusion 34 are provided at the center of the front end of the upper housing 31. The recess portion 33 is formed by recessing the center portion of the front side wall 311 of the upper housing 31 toward the rear of the vehicle. The tongue piece-shaped attachment protrusion 34 is housed in the recess portion 33. The attachment protrusion 34 has a central axis that is located coaxially with the central axis S of the housing 30, and protrudes from the bottom of the recess portion 33 toward the front of the vehicle. The base end of the attachment protrusion 34 is bonded to the front side wall 311 at the bottom of the recess portion 33. The front end of the attachment protrusion 34 is located behind the front end of the front side wall 311. That is, the entirety of the attachment protrusion 34 is accommodated in the recess portion 33 (see FIG. 3).

The attachment protrusion 34 has a structure for attaching the housing 30 to the windshield 2 through a bracket 3(described later) pasted to the windshield 2 side together with the left attachment pin 315 and the right attachment pin 316 described above.

On the other hand, the lower housing 32 is disposed below the upper housing 31 so as to close the opening of the upper housing 31. The lower housing 32 has a bottom 321 constituting the bottom of the housing 30 and a rear side wall 322 constituting the rear side wall of the housing 30. A recess portion 323 is provided at a position corresponding to the recess portion 33 in the lower housing 32 so as to match with the recess portion 33 on the upper housing 31 side.

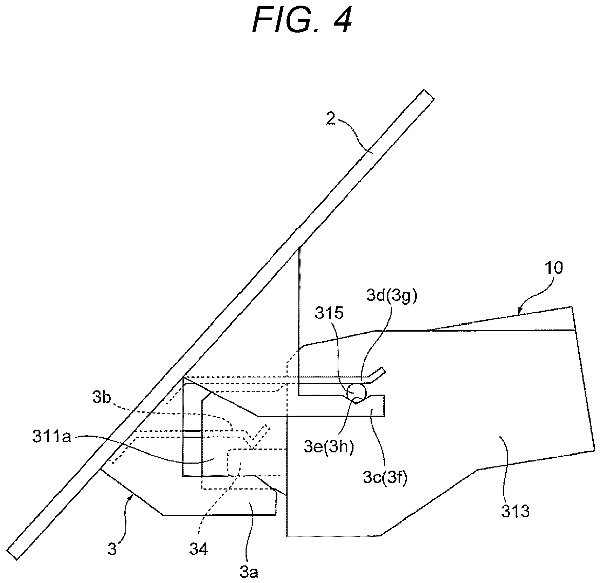

Attachment of the stereo camera device 10 in the embodiment to the windshield 2 will be described below with reference to FIG. 4.

FIG. 4 is a schematic side view illustrating a form in which the stereo camera device is attached to the windshield. As illustrated in FIG. 4, the bracket 3 is attached to the inside of the windshield 2 with an adhesive or the like. The bracket 3 is disposed so that a longitudinal direction thereof is along the vehicle left-right direction. The bracket 3 has a central support portion 3a and a center urging spring 3b. The central support portion 3a is provided at the center position in the longitudinal direction of the bracket and abuts on the attachment protrusion 34 of the housing 30 from below to support the attachment protrusion 34. The center urging spring 3b urges the attachment protrusion 34 toward the central support portion 3a from above. Note that, the central support portion 3a is formed to be insertable into the recess portion 33 of the housing 30.

The bracket 3 also has a left support portion 3c and a left urging spring 3d. The left support portion 3c is provided at the left end portion in the longitudinal direction of the bracket and supports the left attachment pin 315 of the housing 30 from below. The left urging spring 3d urges the left attachment pin 315 to the left support portion 3c side from above. As illustrated in FIG. 4, a V-shaped groove portion 3e is formed at a position corresponding to the left attachment pin 315 on the left support portion 3c. Thus, the left attachment pin 315 is urged downward by the left urging spring 3d, in a state of being engaged with the groove portion 3e.

Although not illustrated, the bracket 3 further has a right support portion 3f and a right urging spring 3g. The right support portion 3f is provided at the right end portion in the longitudinal direction of the bracket and supports the right attachment pin 316 of the housing 30 from below. The right urging spring 3g urges the right attachment pin 316 to the right support portion 3f side from above. Similar to the left support portion 3c, a V-shaped groove portion 3h is formed at a position corresponding to the right attachment pin 316 on the right support portion 3f. Each of the central urging spring 3b, the left urging spring 3d, and the right urging spring 3g are formed by a leaf spring.

The stereo camera device 10 is fixed to the bracket 3 while being supported by the bracket 3 at three places such as the center, the left, and the right (three-point support). That is, at the center, the attachment protrusion 34 of the housing 30 is urged downward by the central urging spring 3b, in a state of being supported by the central support portion 3a of the bracket 3. Then, on the left side, the left attachment pin 315 of the housing 30 is urged downward by the left urging spring 3d, in a state of being supported by the left support portion 3c of the bracket 3. Further, on the right side, the right attachment pin 316 of the housing 30 is urged downward by the right urging spring 3g, in a state of being supported by the right support portion 3f of the bracket 3. Thus, the stereo camera device 10 is attached to the windshield 2 through the bracket 3.

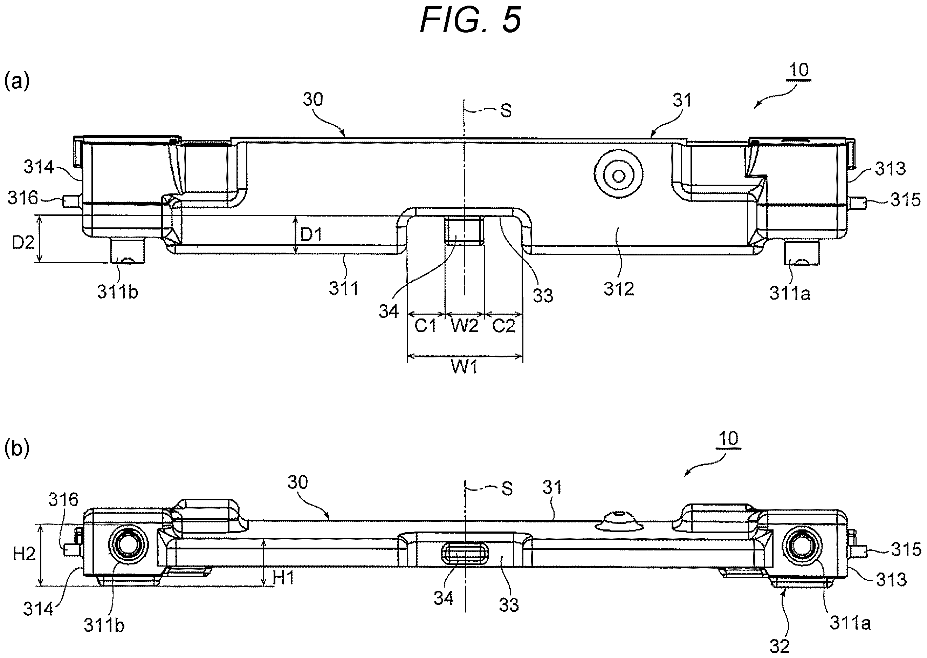

The recess portion 33 of the stereo camera device 10 will be described with reference to FIGS. 5(a) and 5(b). FIG. 5(a) is a plan view for explaining the recess portion of the stereo camera device, and FIG. 5(b) is a front view for explaining the recess portion of the stereo camera device.

As illustrated in FIGS. 5(a) and 5(b), when a direction of the recess portion 33 along the vehicle left-right direction is set to a width direction, a direction along the vehicle front-rear direction is set to a depth direction, and a direction along a vehicle vertical direction is set to a height direction, the width W1, the depth D1, and the height H1 of the recess portion 33 satisfy the following relational expression.

$$W1 = W2 + C1 + C2 \quad D1 < D2 \quad H1 < H2$$

Here, the height H1 of the recess portion 33 is based on the bottom surface located at the bottom of the housing 30 (that is, the bottom surface located at the bottom of the lower housing 32). H2 indicates a distance from the bottom surface located at the bottom of the housing 30 to the upper end of the left column 311a or the right column 311b. The depth D1 of the recess portion 33 means the distance from the bottom of the recess portion 33 to the front end of the front side wall 311. D2 indicates the distance from the bottom of the recess portion 33 to the front end of the left column 311a or the right column 311b.

In addition, W2 indicates the width of the attachment protrusion 34. C1 and C2 indicate clearances for preventing the interference of the bracket 3 and the housing 30 with each other.

If the recess portion 33 satisfies the above relational expression, when the left imaging unit 11L and the right imaging unit 11R are brought close to the windshield 2, a situation in which the housing 30 interferes with the windshield 2 (in other words, is brought into contact with the windshield 2) ahead of the left imaging unit 11L and the right imaging unit 11R does not occur. If the housing 30 interferes with the windshield 2 first, it is not possible to bring the stereo camera device 10 close to the windshield 2.

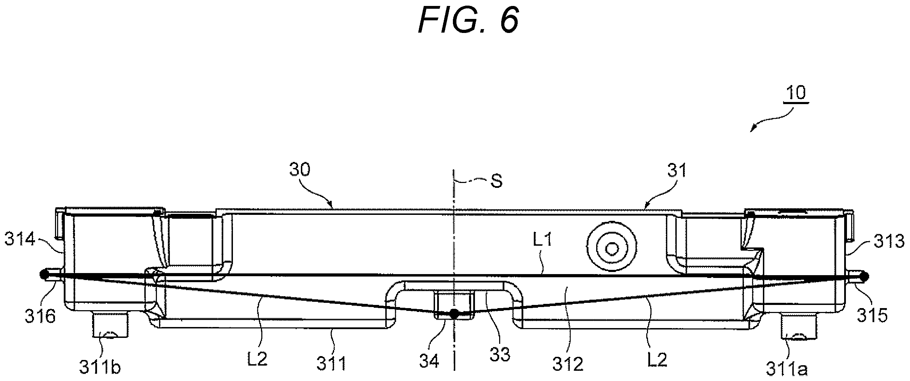

Further, as described above, the housing 30 is supported by the bracket 3 with the attachment protrusion 34, the left attachment pin 315, and the right attachment pin 316. Thus, as illustrated in FIG. 6, if the three points of the attachment protrusion 34, the left attachment pin 315, and the right attachment pin 316 are connected by a straight line, an isosceles triangle having the attachment protrusion 34 as a vertex is formed. Note that, the black circle in FIG. 6 indicates the position (that is, the urging point) at which the urging spring of the bracket 3 applies an urging force to the attachment protrusion 34, the left attachment pin 315, and the right attachment pin 316 of the housing 30.

Here, L1/2 indicating the half of the distance between the urging point on the left attachment pin 315 side and the urging point on the right attachment pin 316 side, and a distance L2 between the urging point on the attachment protrusion 34 side and the urging point on the left attachment pin 315 side or the right attachment pin 316 side are desired to satisfy L1/2≈L2.

Since L1/2 and L2 are set to satisfy the above expression, it is possible to suppress the deviation of the optical axes 12L and 12R generated by a force in the direction of gravity, that acts on the left attachment pin 315 or the right attachment pin 316 when the attachment protrusion 34 is used as a fulcrum. For example, the applied force in the direction of gravity includes the weight of the stereo camera device 10, the urging force of the left urging spring 3d to the left attachment pin 315, and the urging force of the right urging spring 3g to the right attachment pin 316.

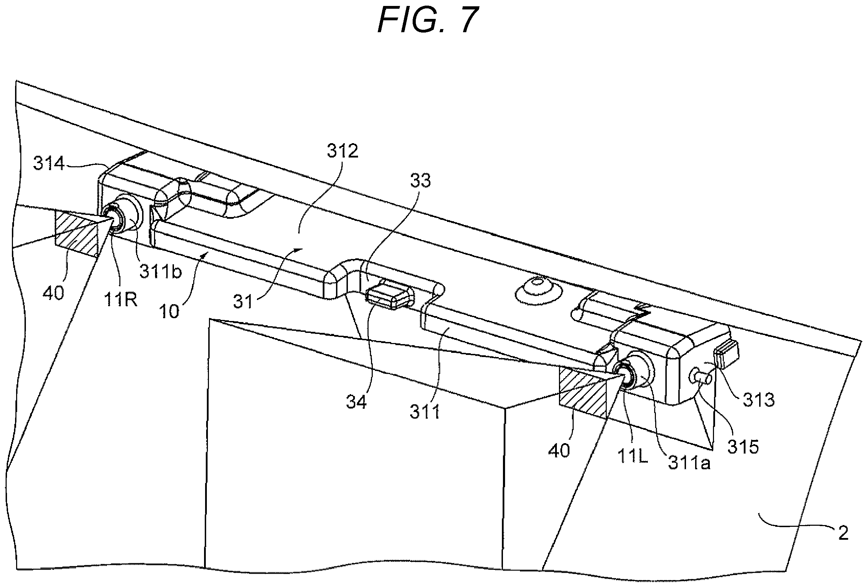

According to the stereo camera device 10 in the embodiment, since the recess portion 33 for accommodating the attachment protrusion 34 is provided at the center of the front end of the housing 30, it is possible to attach the left imaging unit 11L and the right image pickup portion 11R close to the windshield 2. Therefore, as illustrated in FIG. 7, it is possible to reduce the imaging area 40 of the left imaging unit 11L and the right imaging unit 11R on the windshield 2, and thus to improve the degree of freedom of layout when the stereo camera device 10 is attached to the windshield 2.

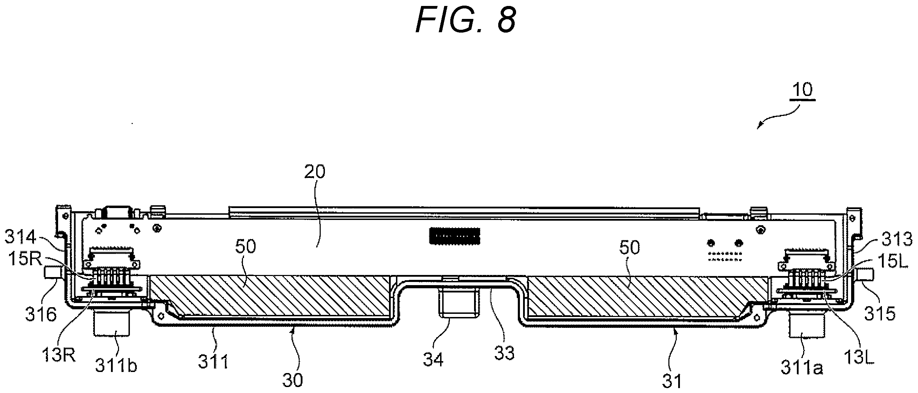

When the stereo camera device 10 is attached close to the windshield 2, a problem that depth of the stereo camera device 10 is reduced, and thus the area of the control circuit board 20 is reduced occurs. On the other hand, in the embodiment, as illustrated in FIG. 8, it is possible to increase the area of the control circuit board 20 to the shaded portions 50 on both the left and right sides of the recess portion 33 with the recess portion 33 interposed between the shaded portions 50. Thus, it is possible to bring the stereo camera device 10 close to the windshield 2 and to secure the board area of the control circuit board 20. Further, since the recess portion 33 is provided, it is possible to increase the surface area of the housing 30. Accordingly, it is possible to expect an effect of improving the heat dissipation efficiency of the stereo camera device 10.

Note that, in the embodiment, a case where the width W1, the depth D, and the height H1 of the recess portion 33 satisfy the above-described relational expression has been described. However, regarding the shape of the recess portion 33, the width W1, the above-described relational expression may not be satisfied so long as the action and effect of the embodiment are not impaired even though the housing 30 is first brought into contact with the windshield 2 when the left imaging unit 11L and the right imaging unit 11R are brought close to the windshield 2. For example, even in a case of H1> H2, if D1 is much smaller than D2 (that is, D1 << D2), it is possible to obtain the same action and effect as in the embodiment. On the contrary, even in a case of D1> D2, if H1 is much smaller than H2 (that is, H1 << H2), it is possible to obtain the same action and effect as in the embodiment.

Hitherto, although the embodiment of the present invention has been described in detail above, the present invention is not limited to the above-described embodiment, and various design changes can be made without departing from the scope of the present invention described in the claims. For example, in the above-described embodiment, the example in which the entirety of the attachment protrusion 34 is accommodated in the recess portion 33 has been described. However, at least a portion of the attachment protrusion 34 only has to be accommodated in the recess portion 33, and, for example, the front end of the attachment protrusion 34 may be located in front of the front end of the front side wall 311. Note that, in this case, the front end of the attachment protrusion 34 needs to be located behind the front ends of the left imaging unit 11L and the right imaging unit 11R. Specifically, the front end of the attachment protrusion 34 is located behind both the front end of the left column 311a into which the left lens unit 14L is inserted and the front end of the right column 311b into which the right lens unit 14R is inserted. If the front end of the attachment protrusion 34 is located in such a manner, the same effect as in the above-described embodiment can be obtained.

Reference Signs List

| | |
|---|---|
| 1 | vehicle |
| 2 | windshield |
| 10 | stereo camera device |
| 11L | left imaging unit |
| 11R | right imaging unit |
| 13L | left imaging board |
| 13R | right imaging board |
| 14L | left lens unit |
| 14R | right lens unit |
| 15L | left cable unit |
| 15R | right cable unit |
| 16L, 16R | flange portion |
| 20 | control circuit board |
| 21L | left connector |
| 21R | right connector |
| 22 | board recess portion |
| 30 | housing |

| 31 | upper housing |
| 32 | lower housing |
| 33 | recess portion |
| 34 | attachment protrusion |
| 311 | front side wall |
| 311a | left column |
| 311b | right column |
| 312 | top plate |
| 313 | left side wall |
| 314 | right side wall |
| 315 | left attachment pin |
| 316 | right attachment pin |
| 321 | bottom |
| 322 | rear side wall |
| 323 | recess portion |

**Claims**

1. A stereo camera device comprising:

a pair of imaging units (11L, 11R) that image a front of a windshield (2) through the windshield (2);
a control circuit board (20) that is electrically connected to each of the pair of imaging units (11L, 11R); and
a housing (30) that accommodates the pair of imaging units (11L, 11R) and the control circuit board (20) and is allowed to be attached to the windshield (2) through an attachment protrusion (34) provided at the center of a front end of the housing,
wherein a recess portion (33, 323) for accommodating at least a portion of the attachment protrusion (34) is provided at the center of the front end of the housing (30).
**characterized in that**
the control circuit board (20) has a board recess portion (22) provided at a position corresponding to the recess portion (33, 323).

2. The stereo camera device according to claim 1, wherein the pair of imaging units (11L, 11R) are arranged on both sides of the control circuit board (20) with the board recess portion (22) interposed between the pair of imaging units (11L, 11R).

3. The stereo camera device according to any one of claims 1 or 2, wherein the entirety of the attachment protrusion (34) is housed in the recess portion (33).

4. The stereo camera device according to any one of claims 1 or 2, wherein the front end of the attachment protrusion (34) is located behind front ends of the pair of imaging units (11L, 11R) .

**Patentansprüche**

1. Stereokameravorrichtung, die Folgendes umfasst:

ein Paar Bildgebungseinheiten (11L, 11R), die eine Vorderseite einer Windschutzscheibe (2) durch die Windschutzscheibe (2) abbilden;
eine Steuerungsleiterplatte (20), die mit jeder Bildgebungseinheit des Paars (11L, 11R) elektrisch verbunden ist; und
ein Gehäuse (30), das das Paar Bildgebungseinheiten (11L, 11R) und die Steuerungsleiterplatte (20) aufnimmt und durch einen Befestigungsvorsprung (34), der am Zentrum eines vorderen Endes des Gehäuses vorgesehen ist, an der Windschutzscheibe (2) angebracht werden darf, wobei
ein Aussparungsabschnitt (33, 323) zum Aufnehmen mindestens eines Abschnitts des Befestigungsvorsprungs (34) im Zentrum des vorderen Endes des Gehäuses (30) vorgesehen ist,
**dadurch gekennzeichnet, dass** die Steuerungsleiterplatte (20) einen Platinenaussparungsabschnitt (22) besitzt, der an einer Position vorgesehen ist, die dem Aussparungsabschnitt (33, 323) entspricht.

**2.** Stereokameravorrichtung nach Anspruch 1, wobei
die Bildgebungseinheiten (11L, 11R) des Paars auf beiden Seiten der Steuerungsleiterplatte (20) angeordnet sind,
wobei der Platinenaussparungsabschnitt (22) zwischen den Bildgebungseinheiten (11L, 11R) des Paars angeordnet ist.

**3.** Stereokameravorrichtung nach einem der Ansprüche 1 oder 2, wobei der gesamte Befestigungsvorsprung (34) im Aussparungsabschnitt (33) untergebracht ist.

**4.** Stereokameravorrichtung nach einem der Ansprüche 1 oder 2, wobei das vordere Ende des Befestigungsvorsprungs (34) hinter vorderen Enden der Bildgebungseinheiten (11L, 11R) des Paars angeordnet ist.

**Revendications**

**1.** Dispositif de caméra stéréoscopique comprenant :

une paire d'unités d'imagerie (11L, 11R) qui créent une image d'une zone avant d'un pare-brise (2) à travers le pare-brise (2) ;
une carte à circuit de commande (20) qui est connectée électriquement à chacune de la paire d'unités d'imagerie (11L, 11R) ; et
un boîtier (30) qui loge la paire d'unités d'imagerie (11L, 11R) et la carte à circuit de commande (20) et qu'il est possible de fixer au pare-brise (2) au moyen d'une projection de fixation (34) prévue au centre d'une extrémité avant du boîtier,
dans lequel une portion d'évidement (33, 323) destinée à loger au moins une portion de la projection de fixation (34) est prévue au centre de l'extrémité avant du boîtier (30),
**caractérisé en ce que**
la carte à circuit de commande (20) a une portion d'évidement de carte (22) prévue à une position correspondant à la portion d'évidement (33, 323).

**2.** Dispositif de caméra stéréoscopique selon la revendication 1, dans lequel la paire d'unités d'imagerie (11L, 11R) sont agencées sur les deux côtés de la carte à circuit de commande (20) avec la portion d'évidement de carte (22) interposée entre la paire d'unités d'imagerie (11L, 11R).

**3.** Dispositif de caméra stéréoscopique selon l'une quelconque des revendications 1 ou 2, dans lequel la totalité de la projection de fixation (34) est logée dans la portion d'évidement (33).

**4.** Dispositif de caméra stéréoscopique selon l'une quelconque des revendications 1 ou 2, dans lequel l'extrémité avant de la projection de fixation (34) est située derrière des extrémités avant de la paire d'unités d'imagerie (11L, 11R).

# FIG. 1

(a)

(b)

EP 3 816 576 B1

## FIG. 2

EP 3 816 576 B1

## FIG. 3

# FIG. 4

# FIG. 5

*FIG. 6*

FIG. 7

FIG. 8

# FIG. 9

(a)

(b)

**EP 3 816 576 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009068906 A
- JP 2015198224 A